# EUROPÄISCHE PATENTSCHRIFT

(11) **EP 4 045 756 B1**
(45) Veröffentlichungstag und Bekanntmachung des Hinweises auf die Patenterteilung: **02.08.2023**
(21) Anmeldenummer: 21709621.3
(22) Anmeldetag: 07.01.2021
(51) Int. Cl.: E06B 11/08, G01V 8/20

(54) **ANORDNUNG FÜR DURCHGANGSANLAGE SOWIE VERFAHREN ZUM BETREIBEN EINER ANORDNUNG**
ARRANGEMENT FOR A PASSAGE SYSTEM AND METHOD FOR OPERATING AN ARRANGEMENT
AGENCEMENT POUR UN SYSTÈME DE PASSAGE ET PROCÉDÉ POUR FAIRE FONCTIONNER UN AGENCEMENT

(30) Priorität: 09.01.2020 DE 202020100094 U
(43) Veröffentlichungstag der Anmeldung: 24.08.2022
(73) Patentinhaber: Wanzl GmbH & Co. KGaA, 89340 Leipheim (DE)
(72) Erfinder: HÄMMERLE, Jürgen, 89312 Günzburg (DE); SOLTES, Tiberius, 89312 Günzburg (DE); BAUMEISTER, Jörg, 86381 Krumbach (DE); WEBERT, Dirk, 89340 Leipheim (DE)
(86) Internationale Anmeldenummer: PCT/EP2021/050197
(87) Internationale Veröffentlichungsnummer: WO 2021/140158

(56) Entgegenhaltungen:
- EP-A1- 0 075 806
- EP-A1- 2 112 322
- GB-A- 2 175 348

## Beschreibung

Die vorliegende Erfindung betrifft eine verbesserte Anordnung für eine Durchgangsanlage, insbesondere für eine Durchgangsanlage mit einer verbesserten Schwenkbereichsüberwachung eines Personendurchgangs. Die Erfindung beschreibt weiterhin ein Verfahren zum Betreiben einer solchen Anordnung.

Eine solche Anordnung für eine Durchgangsanlage ist aus der Europäischen Patentschrift EP 0 075 806 A1 bekannt. Es handelt sich hierbei um eine Schwenktüranordnung für Durchgangsanlagen mit einer berührungslos wirkenden Personenabtasteinrichtung zur Betätigung eines elektromotorischen Schwenktürantriebs, bei der innerhalb eines am Boden verankerten, aufrechtstehenden rohrförmigen Gehäuses die Lagerung des Türflügels, seine Antriebswelle mit einem Schwenkgetriebe sowie ein drehrichtungsumkehrender Elektromotor angeordnet sind. Die Schwenktüranordnung sieht ein bei einem bestimmten Drehmoment sich lösendes Gesperre vor, das zwischen einem mit dem Türflügel und einem mit dem Gehäuse verbundenen Teil angeordnet ist. Die Lagerung des Türflügels, seine Antriebswelle mit dem Schwenkantrieb, sowie der Elektromotor sind als säulenförmige Baueinheit an beiden Seiten einer Flanschplatte angeordnet, die im ortsfesten, mit dem Boden verbundenen Gehäuse geführt und an Flanschansätzen verschraubt ist. Ein die Baueinheit umgreifendes, mit dem Türflügel verbundenes und das Gesperre enthaltenes Rohr, dessen Durchmesser demjenigen des Gehäuses entspricht, ist axial über die das Gehäuse überragende Baueinheit unter Führung auf der Antriebswelle aufsetzbar. Die Lagerung des Türflügels ist mit einer die Gehäusesäule nach oben abschließende Gehäusekappe über eine innenliegende Flanschverbindung verschraubbar.

Die Durchgangsanlage besteht aus zwei sich gegenüberstehenden Schwenktüren, deren Türflügel in geschlossenem Zustand auf einer gemeinsamen vertikalen Ebene angeordnet sind. Mit den Schwenktüren ist eine berührungslos wirkende Personenabtasteinrichtung in Form einer Lichtschranke verbunden. Schreitet eine Person durch den Lichtstrahl der Lichtschranke, öffnen sich die Türflügel in Durchgangsrichtung und schließen automatisch nach Ablauf einer bestimmten Zeit.

Weiterhin findet eine so genannte "Paniksicherung" Einsatz, die es erlaubt, im Panikfalle die Türflügel entgegengesetzt zur Durchgangsrichtung unter Aufbringen einer bestimmten Kraft zu öffnen.

In einem Pfosten ist eine Sende- und Empfangseinheit, insbesondere eine Sendediode, angeordnet, die mit einem im gegenüberliegenden Pfosten befindlichen Reflektor zusammenwirkt. Über Holme sind die Pfosten mit den Türpfosten fest verbunden. Die Türpfosten weisen ein am Boden fest verankertes Gehäuse, sowie ein daran drehbar gelagertes Rohr auf, an dem die Türflügel befestigt sind.

Im zitierten Stand der Technik ist die Lichtschranke in einem ersten Pfosten angeordnet. Im Rohrpfosten ist eine Öffnung vorgesehen, durch die der von einer im Inneren des ersten Pfostens angeordneten Sendediode erzeugte Lichtstrahl hindurchführt.

An einem zweiten, gegenüberliegenden Pfosten ist ein Reflektor angeordnet, der einen Teil des von der Sende- und Empfangseinheit ausgestrahlten Lichtes reflektiert.

Der von der Sende- und Empfangseinheit ausgestrahlte Lichtstrahl ist kegelförmig und bildet im Bereich des Reflektors eine wesentlich größere Fläche als die Spiegelfläche des Reflektors. Der Reflektor befindet sich im Normalfall im ausgestrahlten Lichtkegel. Der Lichtkegel erfasst auch beim Durchfahren eines Transportwagens, wie z.B. eines Einkaufswagens, durch den von den Rohrpfosten gebildeten Durchgang, wobei auf dem Reflektor eine Abschattung erfolgt. Diese Abschattung bewirkt das Auslösen eines elektrischen Impulses in der Sende- und Empfangseinheit zum Zwecke des automatischen Öffnens der Türflügel. Wie auch in der EP 0 622 514 B1 beschrieben, öffnen sich die Türflügel und schwenken gewöhnlich um 90° aus. Nach einer vorgegebenen Zeitspanne schwenken beide wieder in ihre Ausgangslage zurück, in welcher der Durchgang geschlossen ist.

Der keilförmige Lichtstrahl wird durch eine Sendediode mit einem Lichtaustrittswinkel von etwa 10 bis 15 Grad erzeugt. Als Lichtempfänger ist eine Fotodiode oder ein Fototransistor vorgesehen. Die Sendediode und die Fotodiode bzw. der Fototransistor bilden im Wesentlichen zusammen die Sende- und Empfangseinheit.

Als Reflektor ist eine stark rückstrahlende Kunststoff-Folie vorgesehen. Eine Abmessung von 16 x 100 mm findet bei einem Rohrpfosten von 60 mm Anwendung.

Der Abstand zwischen beiden Rohrpfosten liegt üblicherweise bei 1000 mm. Dabei ist der Durchmesser des Lichtkegels in einem Abstand von 700 mm von der Lichtquelle bereits wenigstens 120 mm groß.

In einer weiterführenden Entwicklung, wie z.B. in der EP 0 643 189 A1 beschrieben, ist die Sende- und Empfangseinheit im Eingangsbereich an einem unteren Holm vorgesehen, der die Verbindung zwischen dem Pfosten und dem Türpfosten bildet. Insbesondere ist der Holm am Gehäuse angeordnet.

Auch in der DE 10 2012 106 404 B4 ist eine Anlage der vorliegenden Gattung offenbart, die mit einer Schwenkbereichsüberwachung ausgestattet ist. Durch eine verminderte Leistung in Ruhe- und Offenstellung der Absperrvorrichtung, d.h. des Türflügels, kann der Energiebedarf der Anlage gemindert werden. Die jeweils nötige Bremsleistung wird anhand eines Winkelmesssystems abgefragt und variabel zur Verfügung gestellt.

Weiterhin finden solche Sende- und Empfangseinheiten und entsprechende Reflektoren Einsatz bei einer so genannten Schwenkbereichsüberwachung. Eine solche ist ebenfalls in der bereits zitierten EP 0 643 189 A1 offenbart. Hierbei soll verhindert werden, dass ein Türflügel eine noch im Durchgang befindliche Person erfasst. Nach Ablauf der Offenhaltezeit schließt die Schwenktüre automatisch, vorausgesetzt die in Eingangsrichtung nach dem Türflügel angeordneten Sensoren erkennen, dass sich keine Person mehr im Schwenkbereich des Türflügels befindet. Hierfür ist eine Vielzahl an Sende- und Empfangseinheiten auf einem unteren waagrechten Holm angeordnet. Eine entsprechende Anzahl an Reflektoren befindet sich auf einem gegenüberliegenden waagrechten Holm in gleicher Höhe.

Es kommt jedoch vor, dass Beschädigungen an den Reflektoren vorgenommen werden, oder aber die Position der Reflektoren nicht dauerhaft gewährleistet sein kann, da sich der Holm, an dem die Reflektoren überwiegend angeordnet werden, in seiner Halterung bewegt bzw. verrutscht oder verschoben hat.

Weiterhin kann es sein, dass auch der waagrechte Holm, in dem die Sende- und Empfangseinheit angeordnet ist, in seiner Halterung bewegt oder verdreht worden ist, so dass der Lichtstrahl die gegenüberliegenden Reflektoren nicht mehr trifft.

EP2112322A1 offenbart auch ein Anordnung für eine Durchgangsanlage.

Es ist daher eine Aufgabe der vorliegenden Erfindung, eine verbesserte Anordnung für eine Durchgangsanlage bereitzustellen, bei der die Nutzung der Reflektoren dauerhaft gewährleistet ist.

Gemäß der vorliegenden Erfindung wird diese Aufgabe gelöst durch eine Anordnung gemäß Anspruch 1.

Es ist somit eine Idee der vorliegenden Erfindung, die Reflektorfläche zu vergrößern und somit eine verbesserte Nutzung der Lichtschranke zu erzielen und mögliche Fehlstellungen der waagrechten Holme zu kompensieren.

Vorzugweise kann die Absperrvorrichtung in Form einer Schwenktüre ausgeführt sein. Diese Ausführung ist kostengünstig und findet üblicherweise in Supermärkten Einsatz. Eine solche Anlage kann mit einer oder aber zwei Schwenktüren ausgeführt sein.

Bevorzugt kann die Anzahl an Sende- und Empfangseinheiten und Reflektorstreifen abhängig von der Ausführung der Absperrvorrichtung sein. Bei einer Schwenktüre ist je nach Breite des Durchgangs die Länge des Schwenkarms der Schwenktüre bemessen. Beim Öffnen des Durchgangs verweilt der Schwenkarm Platz sparend und um ca. 90° verschwenkt zwischen zwei waagrechten Holmen. Je nach Breite des Durchgangs und Anzahl der Schwenktüren ist die Anzahl an Sende- und Empfangseinheiten sowie an Reflektorstreifen entsprechend vorzusehen.

Erfindungsgemäß sieht die Anordnung neben dem ersten waagrechten Holm und dem zweiten gegenüberliegenden waagrechen Holm einen weiteren gegenüberliegenden zweiten waagrechten Holm vor, der unterhalb des gegenüberliegenden zweiten Holms angeordnet ist.

Erfindungsgemäß ist der Abstand zwischen diesen beiden Holmen so genutzt, dass beide zweiten Holme zur Aufnahme der Vielzahl von Reflektorstreifen vorgesehen sind.

In einer bevorzugten Ausgestaltung kann zwischen den zwei Reflektorstreifen ein Abstand vorgesehen sein. Vorzugsweise kann der Abstand zwischen zwei Reflektorstreifen bei 50 und 100 mm, bevorzugt bei 80 mm, liegen. Hierdurch kann der Einsatz an Reflektorstreifen eingespart werden, wodurch sich Kosten einsparen lassen.

Weiterhin kann es sich als vorteilhaft erweisen, wenn die Breite eines Reflektorstreifens in einem Bereich von 10 bis 70 mm, bevorzugt bei 40 mm, liegt. Ferner kann die Höhe eines Reflektorstreifens in einem Bereich von 180 bis 320 mm, bevorzugt bei 260 mm, liegen. In diesen Größen lassen sich die Reflektorstreifen einfach verarbeiten.

In einer weiterführenden Ausgestaltung kann die Höhe eines Reflektorstreifens derart ausgeführt ist, dass die Reflektorstreifen den Boden berühren. Der untere zweite Holm entfällt entsprechend und kann folglich eingespart werden.

Es hat sich als sinnvoll erwiesen, wenn die Reflektorstreifen aus einer Reflektorfolie gebildet sind. Diese kann handelsüblich erworben werden und lässt sich auf einfache Art verarbeiten.

Weiterhin bietet es sich an, auch um einen dauerhaften Einsatz zu gewährleisten, die Reflektorstreifen auf eine Wandung zu kleben.

Je nach Art der Ausführung sind die Holme unterschiedlich ausgeführt, so dass verschiedene Anzahlen an Sende- und Empfangseinheiten einzubauen sind. Vorteilhafterweise wird pro Sende- und Empfangseinheit eine Anzahl von ein bis zehn Reflektorstreifen verwendet.

Weiterhin erweist es sich als sinnvoll, wenn zwischen den einzelnen Sende- und Empfangseinheiten ein Abstand von 100 bis 150 mm vorgesehen ist.

Je nach Größe der Anlage ist ein Abstand von 0,5 und 2,5 m, bevorzugt 1 und 2 m, zwischen den Sende- und Empfangseinheiten und den Reflektorstreifen denkbar.

Weiterhin kann die Aufgabe durch ein Verfahren zum Betreiben der Anordnung gelöst werden, wobei hierbei eine erweiterte Hindemiserkennung (AOD) vorgesehen ist, hierbei wird eine Einteilung in ein Zonenbereich 1 und 2 vorgenommen, wobei in den Zonenbereichen 1 und 2 eine Bewegungen einer Person oder eines Gegenstandes auch mit einer geringen Geschwindigkeit detektiert werden kann, wobei die Absperrvorrichtung umgehend stoppt und wobei weiterhin die Absperrvorrichtung mit einer geringen Kraft in die gewünschte Richtung bewegt werden kann.

Ausführungsbeispiele der Erfindung sind in der Zeichnung dargestellt und werden in der nachfolgenden Beschreibung näher erläutert. Es zeigen:
- Fig. 1: eine perspektivische Darstellung eines Ausführungsbeispiels einer erfindungsgemäßen Anordnung mit zwei Schwenktüren und einem möglichen Lichtstrahlverlauf,
- Fig. 2: eine weitere perspektivische Darstellung des in Fig. 1 dargestellten Beispiels,
- Fig. 3: eine weitere perspektivische Darstellung des in Fig. 1 dargestellten Beispiels mit Sicht auf die im waagrechten Holm eingebauten Sende- und Empfangseinheiten,
- Fig. 4: eine weitere perspektivische Darstellung des in Fig. 1 dargestellten Beispiels mit zwei geöffneten Schwenktüren,
- Fig. 5: eine perspektivische Darstellung einer weiteren Ausführungsform einer nicht erfindungsgemäßen Anordnung, die mit Reflektorstreifen ausgestattet ist, die bis zum Boden führen, und
- Fig. 6: eine perspektivische Darstellung einer weiteren Ausführungsform einer erfindungsgemäßen Anordnung, bei der auf jeder Seite zwei untere zweite Holme vorgesehen sind.
- Fig. 7: bis 15 zeigen verschiedene Betriebszustände.

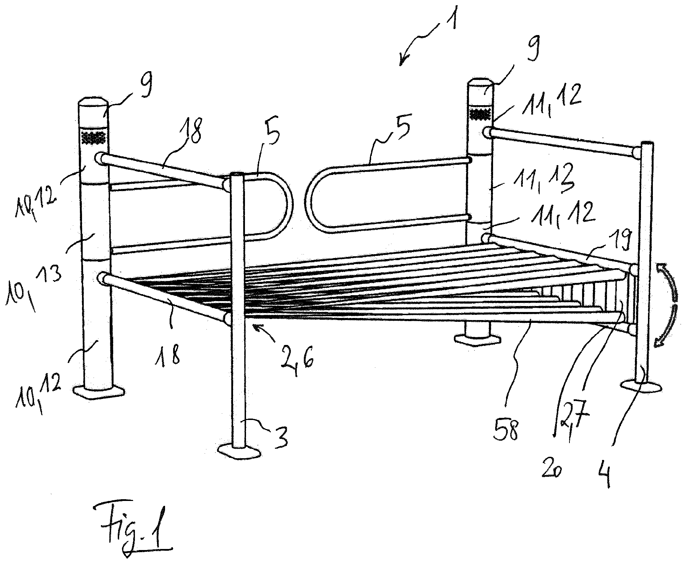

In der Fig.1 ist ein Ausführungsbeispiel der erfindungsgemäßen Anordnung 1 einer Durchgangsanlage dargestellt. Sie weist zwei Pfosten 3, 4 auf, die als Rohrpfosten ausgeführt sind. In der vorliegenden Ausführungsform ist ein erster Pfosten 3 und ein zweiter Pfosten 4 dargestellt, der jeweils in einem drehbar gelagerten Rohr 13 eine Absperrvorrichtung 5 aufweist. Vorliegend findet eine Schwenktür Einsatz. Diese ist aus zwei bogenförmigen Türflügeln gebildet.

Es sind weitere Ausführungsformen an Türflügeln oder Schwenktüren denkbar. Beispielsweise kann lediglich ein Türflügel ausreichend sein. Weiterhin kann eine andere Art einer Absperrvorrichtung, wie z.B. ein Drehkreuz, alternativ Schiebetüren oder andere Arten an Drehtüren, Einsatz finden.

In Fig. 1 sind zwei Türpfosten 10, 11, nämlich ein erster Türpfosten 10 und ein zweiter Türpfosten 11, dargestellt. Diese weisen ein Gehäuse 12 auf, das unterteilt ist von einem drehbar gelagerten Rohr 13 an dem die Absperrvorrichtung 5 angeordnet ist. Das Gehäuse 12 sieht ferner eine Gehäusekappe 9 vor. Im Inneren des Gehäuses 12 ist ein Antrieb, wie im Stand der Technik beschrieben, integriert. An den Gehäuseteilen 12 sind waagrechte Holme 18, 19, 20 angeordnet. Die Holme 18, 19, 20 münden jeweils in einen Pfosten 3, 4. Vorliegend finden ein erster Pfosten 3 und ein zweiter Pfosten 4 Einsatz.

Die Anordnung 1 weist eine Lichtschranke 2 auf. Diese dient zur Überwachung des Schwenkbereichs der Absperrvorrichtung 5. Sofern die Lichtschranke 2 unterbrochen ist, z.B. wenn eine Person oder ein Transportwagen in diesem Bereich verweilt, ist die Absperrvorrichtung 5 in einem geöffneten Zustand, so dass der Durchgang passiert werden kann.

Wie aus Fig. 1 hervorgeht, sind zwischen dem ersten Türpfosten 10 und dem ersten Pfosten 3 ein oberer und ein unterer Holm 18 angeordnet. Im unteren Holm 18 ist eine Sende- und Empfangseinheit 6 einer Lichtschranke 2 vorgesehen. Gegenüberliegend sind die Reflektoren 7 der Lichtschranke 2 vorgesehen, die in Form von Reflektorstreifen 7 ausgeführt sind. Insbesondere sind die Reflektorstreifen 7 im Bereich zwischen einem zweiten Holm 19 und einem weiteren unteren zweiten Holm 20 angeordnet. Es hat sich als sinnvoll erwiesen, zwischen beiden Holmen 19, 20 zunächst eine flächige Aufnahme vorzusehen. Auf diese können dann die Reflektorstreifen 7 aufgebracht, bevorzugt geklebt werden. Die Außenseite der flächigen Aufnahme kann zusätzlich zum Anbringen von Werbung oder anderen Hinweisen Verwendung finden.

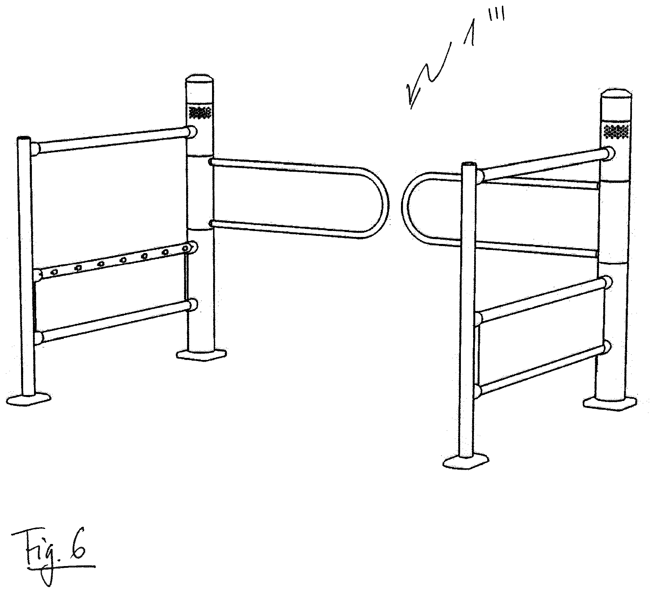

In der weiterführenden Ausführung einer Anordnung 1‴, wie in Fig. 6 dargestellt, ist an beiden Seiten eine solche flächige Aufnahme vorgesehen.

Der Lichtstrahl 58 wird von der Sende- und Empfangseinheit 6 ausgesendet und trifft auf einen der Reflektorstreifen 7, die gegenüberliegend angeordnet sind. Diese reflektieren den Lichtstrahl 58 und er kann von der Sende- und Empfangseinheit 6 wieder empfangen werden.

Nach dem Passieren des Durchgangs schließt die Absperrvorrichtung 5 erst wieder, wenn der Lichtstahl 58 nicht mehr durch die Person oder den Gegenstand unterbrochen ist.

Aufgrund der großen Fläche der Reflektoren 7, die bevorzugt aus vertikalen Streifen ausgeführt sind, erhöht sich die Fehlertoleranz um ein Vielfaches.

Zwischen den einzelnen Reflektorstreifen 7 ist vorzugsweise ein Abstand vorgesehen. Dieser Abstand weist kein reflektierendes Material auf. Hier kann beispielsweise auch ein transparentes Material verwendet werden. Die fehlerlose Erkennung lässt sich hierdurch weiterhin deutlich verbessern.

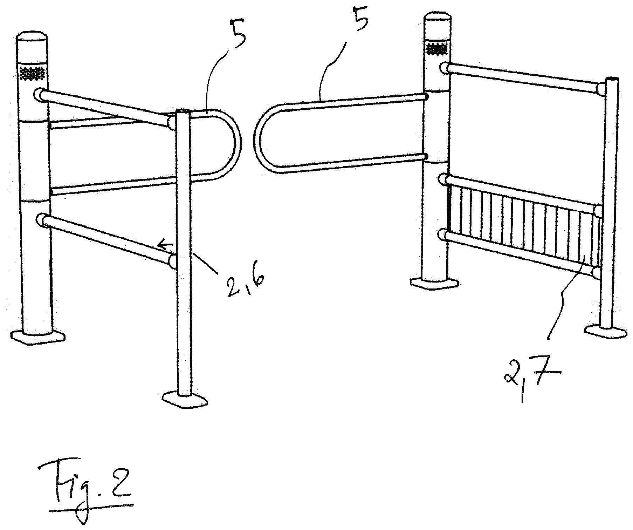

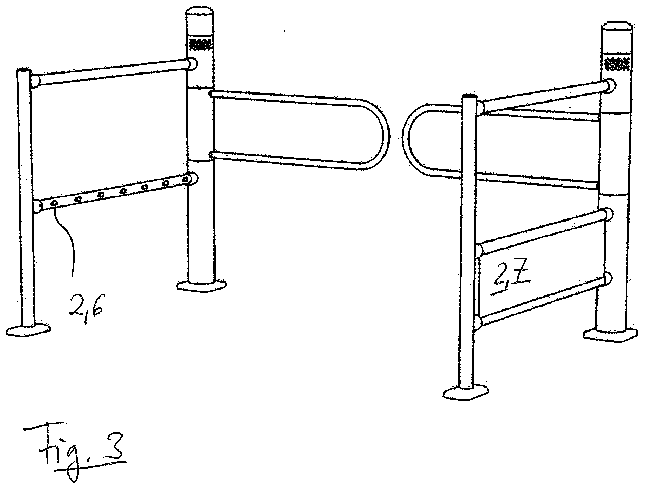

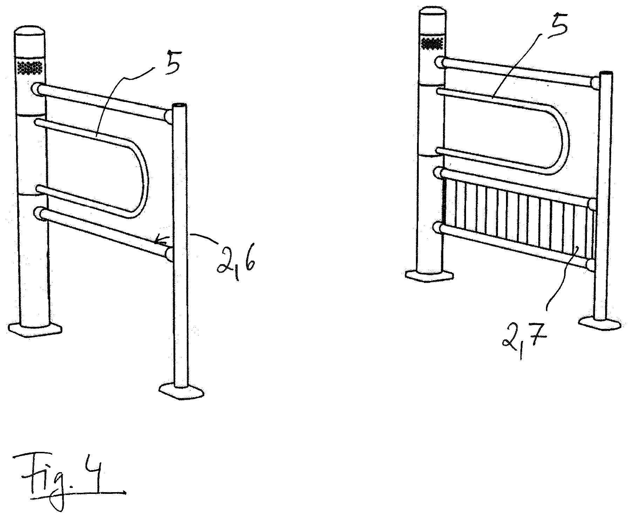

In Fig. 2 ist die Anordnung 1 von der gleichen Perspektive gezeigt, wobei keine Lichtstrahlen dargestellt sind. Fig. 3 zeigt die Anordnung 1 nochmals von einer anderen Perspektive, nämlich mit Blick auf die Sende- und Empfangseinheit. Eine geöffnete Anordnung 1 der Durchgangsanlage ist in Fig. 4 dargestellt.

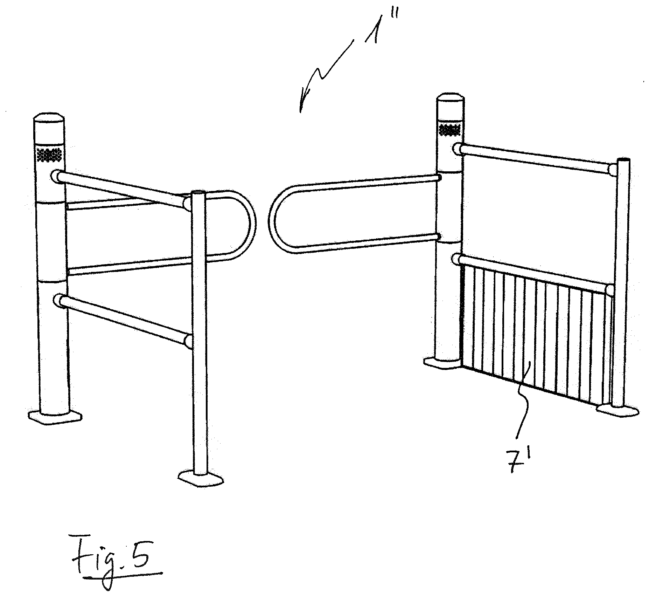

Fig. 5 zeigt eine weiterführende Ausführungsform. Bei Anordnung 1" sind die Reflektorstreifen 7' bis zum Boden ausgeführt. Auch bei dieser Ausführung kann eine flächige Aufnahme vorgesehen sein. Diese ist dann ebenfalls bis zum Boden ausgeführt. Auf den unteren zweiten Holm 20 kann verzichtet werden.

In einer weiterführenden beispielhaften Ausführungsform, wie in den nachfolgenden Seiten dargestellt, ist eine Einteilung der Anordnung 1, 1', 1" in einen Eingangsbereich R1 und einen Überwachungsbereich R2 vorgesehen. Der Eingangsbereich R1 befindet sich vor den Türpfosten 10, 11 und der Überwachungsbereich, Radarbereich R2, hinter den Türpfosten 10, 11, insbesondere in dem Bereich in dem die Holme 18, 19 vorgesehen sind. Der Überwachungsbereich, Radarbereich R2, kann auch noch außerhalb der Anordnung 1, 1', 1" ausgeführt sein.

Radarbereich R1 detektiert in Richtung Eingangsbereich. R2 in Richtung Ladenseite. Weiterhin findet im Bereich der Anordnung 1, 1", 1"' eine Unterteilung in die Zone 1 und 2 statt.

In der bespielhafte nachfolgenden Darstellung sind verschiedene Betriebszustände 1 bis 7 näher beschrieben.

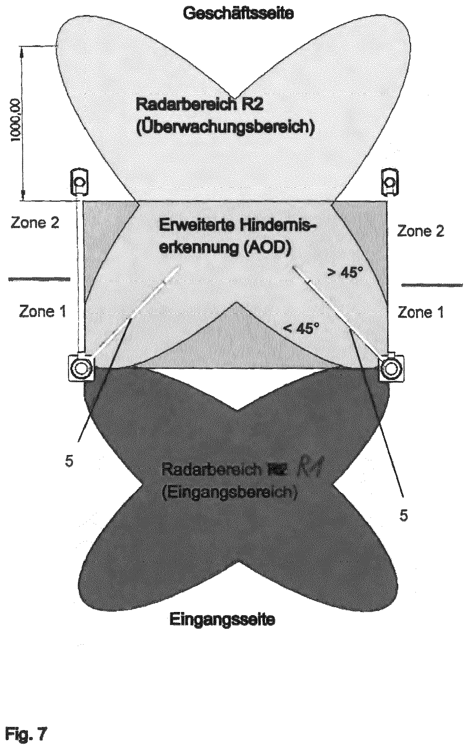

In Figur 7 ff. wird die Erweiterung des Raderfassungsbereichs beschrieben.
Vorhaben: Das normalerweise zum Aktivieren eines hörbaren Alarms verwendete Rückwärtsradar wird für einen erweiterten Erfassungsbereich verwendet. Es ermöglicht die Steuerung der Bewegungen der Schwenkarme durch Abtasten der Bewegung, bevor ein Kunde die AOD-Zone 2 erreicht.
Ziel: Dieser erweiterte Erfassungsbereich erfasst Bewegungen mit einer Minimalgeschwindigkeit von 0,3 m/s bei maximal 1 Meter jenseits der AOD. Falls ein Objekt erfasst wird, hört der Schwenkarm sich zu bewegen auf und können die Arme durch die Kunden mit wenig Kraft (5 Pfund) geschoben oder gezogen werden
Anmerkungen; Wenn R1 einen Öffnungs- und Schließzyklus auslöst, bleiben die Schwenkarme für topen= 8 s geöffnet
Falls R2 länger als talarm= 1 s Bewegungen erfasst oder der Kunde in die AOD eintritt, ertönt ein hörbarer Alarm, bis der Kunde R2 oder die AOD verlassen hat
R2 besteht aus 2 getrennten Radars (links und rechts) und jedes Radar steuert den jeweiligen Durchgangsarm unabhängig
0°bedeutet, dass die Durchgänge geschlossen sind, und 90°bedeutet vollständig geöffnete Arme

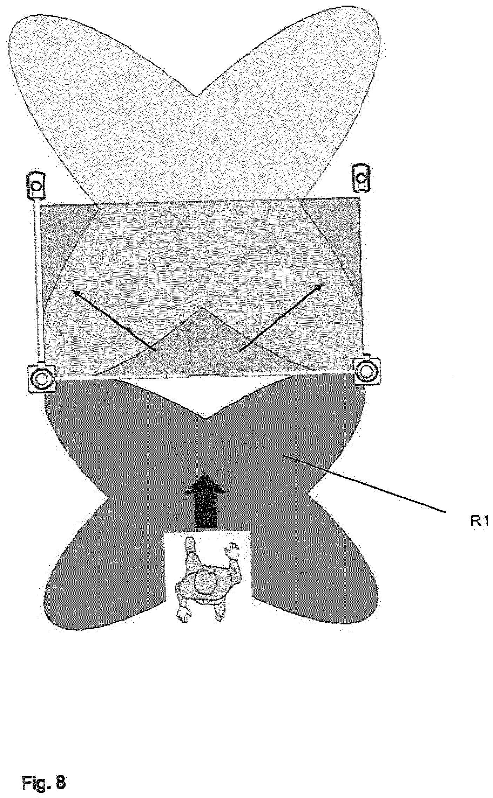

Fig. 8 zeigt eine Erweiterung des Radarerfassungsbereichs FALL 1
Schwenkarm-Anfangsstatus:
   ▪ geschlossen
Kundeneingangsseite:
   ▪ Kunde durch R1 erfasst
Kundengeschäftsseite:
   ▪ nicht vorhanden
Ergebnis:
   ▪ Schwenkarme beginnen sich zu öffnen und schließen sich nach tₒₚₑₙ

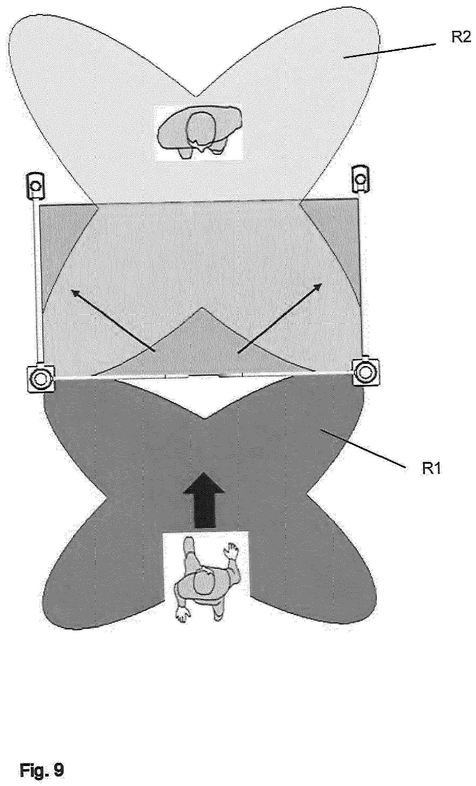

Fig. 9 zeigt eine Erweiterung des Radarerfassungsbereichs FALL 2
Schwenkarm-Anfangsstatus:
   ▪ geschlossen
Kundeneingangsseite:
   ▪ Kunde durch R1 erfasst
Kundengeschäftsseite:
   ▪ Kunde durch R2 erfasst
Ergebnis:
   ▪ Schwenkarme geöffnet
   ▪ Akustischer Alarm für falsche Richtung nach tₐₗₐᵣₘ oder nachdem Kunde AOD betritt

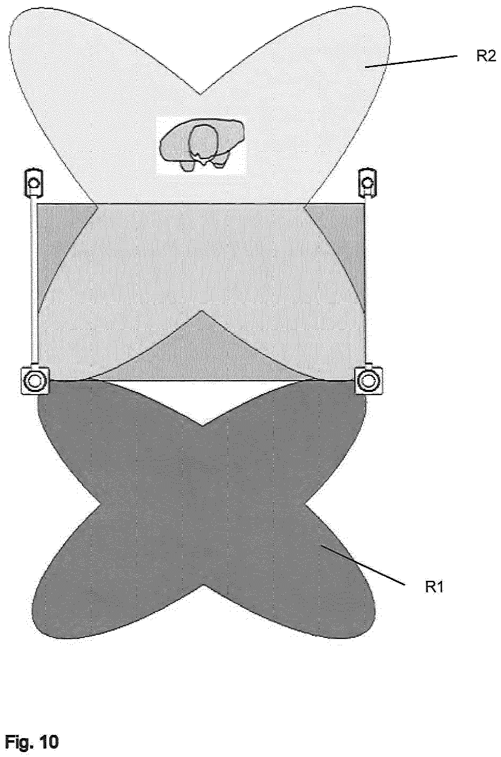

Fig. 10 zeigt eine Erweiterung des Radarerfassungsbereichs FALL 3
Schwenkarm-Anfangsstatus:
   ▪ geöffnet
Kundeneingangsseite:
   ▪ Kunde durch R1 erfasst oder bereits im Geschäft
Kundengeschäftsseite:
   ▪ Kunde durch R2 erfasst
Ergebnis:
   ▪ Schwenkarme bleiben für tₒₚₑₙ geöffnet, das wieder begonnen hat, nachdem R2 den Kunden erfasst hat, und bleiben so lange geöffnet, wie der Kunde durch R2 erfasst wird
   - Hörbarer Alarm für falsche Richtung nach tₐₗₐᵣₘ oder nachdem Kunde AOD betritt

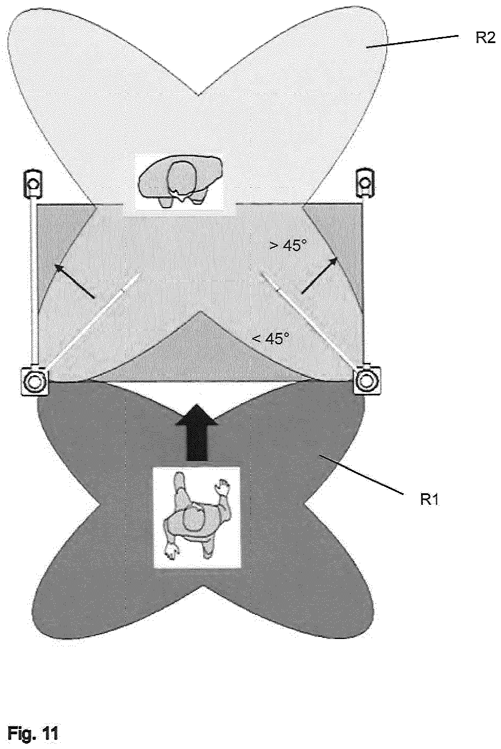

Fig. 11 zeigt eine Erweiterung des Radarerfassungsbereichs FALL 4
Schwenkarm-Anfangsstatus:
   ▪ Öffnungsbewegung
Kundeneingangsseite:
   ▪ Kunde durch R1 erfasst
Kundengeschäftsseite:
   ▪ Kunde durch R2 erfasst and sofort danach durch AOD (Zone 2)
Ergebnis:
   ▪ Schwenkarme öffnen weiter, bis die Zone 2 den Kunden von der Geschäftsseite erfasst, und daraufhin halten die Arme in der aktuellen Stellung an
   ▪ Hörbarer Alarm für falsche Richtung nach tₐₗₐᵣₘ oder nachdem Kunde AOD betritt

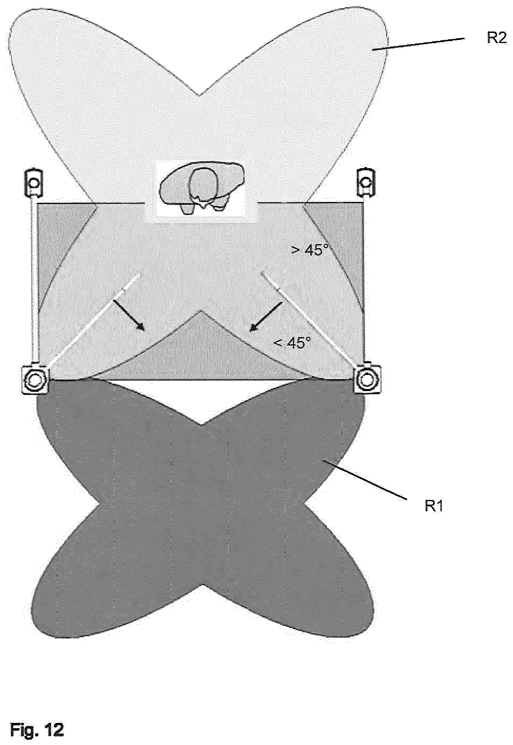

Fig. 12 zeigt eine Erweiterung des Radarerfassungsbereichs FALL 5
Schwenkarm-Anfangsstatus:
   ▪ Schließbewegung
Kundeneingangsseite:
   ▪ nicht vorhanden
Kundengeschäftsseite:
   ▪ Kunde durch R2 erfasst and sofort danach durch AOD (Zone 2)
Ergebnis:
   ▪ Schwenkarme schließen weiter, falls der Öffnungswinkel < 45°ist (Zone 1), und halten an, falls der Öffnungswinkel > 45° ist (Zone 2)
   ▪ Stellung wird gehalten, solange Person durch AOD erfasst wird
   ▪ hörbarer Alarm für falsche Richtung nach tₐₗₐᵣₘ oder nachdem Kunde AOD betritt

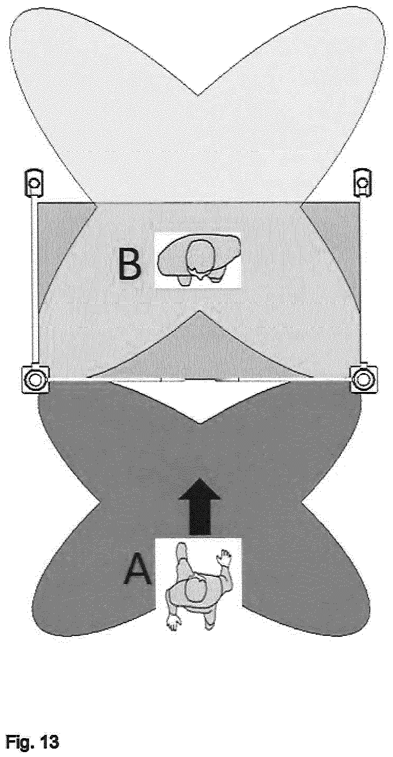

Fig. 13 zeigt eine Erweiterung des Radarerfassungsbereichs FALL 6
Schwenkarm-Anfangsstatus:
   ▪ geschlossen, geöffnet oder in Bewegung
Kundeneingangsseite:
   ▪ Kunde durch R1 erfasst
Kundengeschäftsseite:
   ▪ Kunde durch AOD erfasst
Ergebnis:
   ▪ Schwenkarme halten an und setzen Bewegung fort, nachdem Kunde die AOD verlassen hat
   ▪ hörbarer Alarm für falsche Richtung nach tₐₗₐᵣₘ oder nachdem Kunde AOD betritt

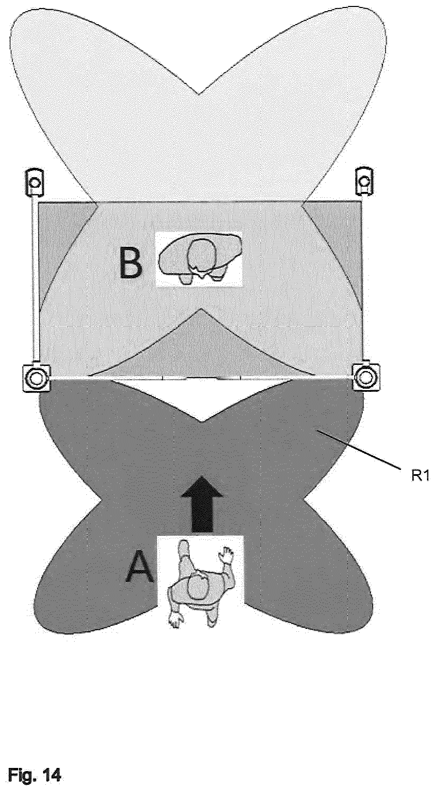

Fig. 14 zeigt ebenfalls eine Erweiterung des Radarerfassungsbereichs FALL 6
Schwenkarm-Anfangsstatus:
   ▪ Geschlossen, geöffnet
Kundeneingangsseite:
   ▪ Kunde durch R1 erfasst
Kundengeschäftsseite:
   ▪ Kunde durch AOD erfasst
Ergebnis:
   ▪ Schwenkarme halten an und setzen Bewegung fort, nachdem Kunde die AOD verlassen hat
   ▪ Hörbarer Alarm für falsche Richtung nach tₐₗₐᵣₘ oder nachdem Kunde AOD betritt

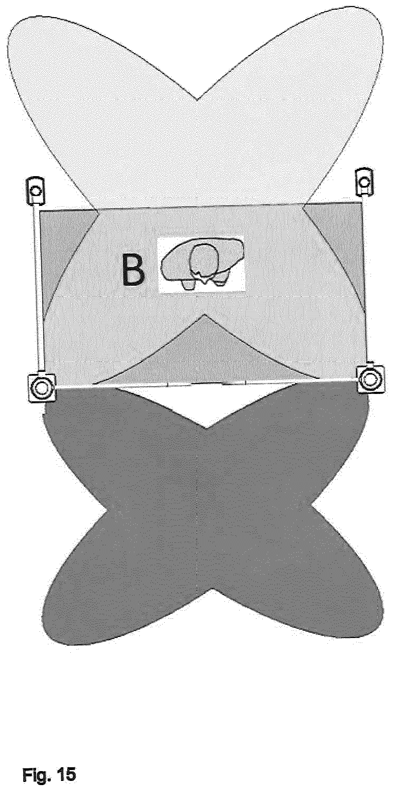

Fig. 15 zeigt eine Erweiterung des Radarerfassungsbereichs FALL 7
Schwenkarm-Anfangsstatus:
   ▪ geschlossen
Kundeneingangsseite:
   ▪ nicht vorhanden
Kundengeschäftsseite:
   ▪ Kunde durch AOD erfasst
Ergebnis:
   ▪ Schwenkarme bleiben in der Haltstellung und öffnen nicht wieder, nachdem Kunde die AOD verlassen hat
   ▪ Hörbarer Alarm für falsche Richtung nach tₐₗₐᵣₘ oder nachdem Kunde AOD betritt

### Bezugszeichenliste

- 1, 1", 1‴: Anordnung
- 2: Lichtschranke
- 3: erster Pfosten
- 4: zweiter Pfosten
- 5: Absperrvorrichtung
- 6: Sende- und Empfangseinheit
- 7, 7': Reflektorstreifen, Reflektoren
- 9: Gehäusekappe
- 10: erster Türpfosten
- 11: zweiter Türpfosten
- 12: Gehäuse
- 13: drehbar gelagertes Rohr
- 18: erster Holm
- 19: zweiter Holm
- 20: unterer zweiter Holm
- 58: Lichtstrahl
- R1: Eingangsbereich
- R2: Überwachungsbereich
- AOD: advanced obstacle detection / erweiterte Hinderniserkennung

## Patentansprüche

1. Anordnung (1, 1", 1‴) für eine Durchgangsanlage mit wenigstens einem Türpfosten (10, 11) und mit einer Absperrvorrichtung (5), mit wenigstens einem Pfosten (3, 4) und mit waagrechten Holmen (18, 19, 20),
wobei die Anordnung eine Lichtschranke (2) aufweist,
wobei an einem ersten Holm (18) eine Vielzahl von Sende- und Empfangseinheiten (6) der Lichtschranke (2) vorgesehen sind und
wobei weiterhin an einem gegenüberliegenden zweiten Holm (19) eine Vielzahl von Reflektorstreifen (7, 7') der Lichtschranke (2) angeordnet sind, die das von den Sende- und Empfangseinheiten (6) ausgestrahlte Licht (58) reflektieren,
**dadurch gekennzeichnet, dass** ein weiterer gegenüberliegender zweiter Holm (20) vorgesehen ist, der unterhalb des gegenüberliegenden zweiten Holms (19) angeordnet ist,
wobei beide zweite Holme (19, 20) zur Aufnahme der Vielzahl an von Reflektorstreifen (7) vorgesehen sind.

2. Anordnung nach Anspruch 1, wobei die Absperrvorrichtung (5) in Form einer Schwenktüre ausgeführt ist.

3. Anordnung nach Anspruch 1, wobei die Anzahl an Sende- und Empfangseinheiten (6) und Reflektorstreifen (7, 7') abhängig von der Ausführung der Absperrvorrichtung (5) ist.

4. Anordnung nach Anspruch 1, wobei zwischen zwei der Vielzahl von Reflektorstreifen (7, 7') ein Abstand vorgesehen ist.

5. Anordnung nach Anspruch 4, wobei der Abstand bei 50 und 100 mm, bevorzugt bei 80 mm, liegt.

6. Anordnung nach Anspruch 1, wobei die Breite eines Reflektorstreifens (7, 7') in einem Bereich von 10 bis 70 mm, bevorzugt bei 40 mm, liegt.

7. Anordnung nach Anspruch 1, wobei die Höhe eines Reflektorstreifens (7, 7') in einem Bereich von 180 bis 320 mm, bevorzugt bei 260 mm, liegt.

8. Anordnung nach Anspruch 1, wobei die Höhe eines Reflektorstreifens (7') derart ausgeführt ist, dass die Reflektorstreifen (7') den Boden berühren.

9. Anordnung nach Anspruch 1, wobei die Reflektorstreifen (7, 7') aus einer Reflektorfolie gebildet sind.

10. Anordnung nach Anspruch 1, wobei die Reflektorstreifen (7, 7') auf eine Wandung geklebt sind.

11. Anordnung nach Anspruch 1, wobei pro Sende- und Empfangseinheit (6) eine Anzahl von ein bis zehn Reflektorstreifen (7, 7') verwendet wird.

12. Anordnung nach Anspruch 1, wobei ein Abstand zwischen den einzelnen Sende- und Empfangseinheiten (6) von 100 bis 150 mm vorgesehen ist.

13. Anordnung nach Anspruch 1, wobei ein Abstand von 0,5 und 2,5 m, bevorzugt 1 und 2 m, zwischen den Sende- und Empfangseinheiten (6) und den Reflektorstreifen (7, 7') vorgesehen ist.

14. Verfahren zur Betreiben einer Anordnung nach einem der vorherigen Ansprüche, wobei eine erweiterte Hinderniserkennung (AOD) vorgesehen ist, hierbei wird eine Einteilung in ein Zonenbereich 1 und 2 vorgenommen, wobei in den Zonenbereichen 1 und 2 eine Bewegungen einer Person oder eines Gegenstandes auch mit einer geringen Geschwindigkeit detektiert werden kann, wobei die Absperrvorrichtung (5) umgehend stoppt und wobei weiterhin die Absperrvorrichtung (5) mit einer geringen Kraft in die gewünschte Richtung bewegt werden kann.

## Claims

1. Arrangement (1, 1", 1‴) for a passage system having at least one door post (10, 11) and having a barrier device (5), having at least one post (3, 4) and having horizontal bars (18, 19, 20), wherein the arrangement has a light barrier (2), wherein a plurality of transceiver units (6) of the light barrier (2) are provided on a first bar (18) and wherein furthermore a plurality of reflector strips (7, 7') of the light barrier (2) are arranged on an opposing second bar (19) and reflect the light (58) emitted by the transceiver units (6), **characterized in that** a further opposing second bar (20) is provided, which is arranged below the opposing second bar (19), wherein both second bars (19, 20) are provided to accommodate the plurality of reflector strips (7).

2. Arrangement according to Claim 1, wherein the barrier device (5) is embodied in the form of a swing door.

3. Arrangement according to Claim 1, wherein the number of transceiver units (6) and reflector strips (7, 7') is dependent on the embodiment of the barrier device (5).

4. Arrangement according to Claim 1, wherein a distance is provided between two of the plurality of reflector strips (7, 7').

5. Arrangement according to Claim 4, wherein the distance is 50 and 100 mm, preferably 80 mm.

6. Arrangement according to Claim 1, wherein the width of a reflector strip (7, 7') is in a range from 10 to 70 mm, preferably 40 mm.

7. Arrangement according to Claim 1, wherein the height of a reflector strip (7, 7') is in a range from 180 to 320 mm, preferably 260 mm.

8. Arrangement according to Claim 1, wherein the height of a reflector strip (7') is configured in such a way that the reflector strips (7') touch the ground.

9. Arrangement according to Claim 1, wherein the reflector strips (7, 7') are formed from a reflector film.

10. Arrangement according to Claim 1, wherein the reflector strips (7, 7') are adhesively bonded on a wall.

11. Arrangement according to Claim 1, wherein a number of one to ten reflector strips (7, 7') is used per transceiver unit (6).

12. Arrangement according to Claim 1, wherein a distance between the individual transceiver units (6) of 100 to 150 mm is provided.

13. Arrangement according to Claim 1, wherein a distance of 0.5 and 2.5 m, preferably 1 and 2 m, is provided between the transceiver units (6) and the reflector strips (7, 7').

14. Method for operating an arrangement according to any of the preceding claims, wherein an advanced obstacle detection (AOD) is provided, for this purpose a division into a zone region 1 and 2 is performed, wherein a movement of a person or of an object can also be detected at a low speed in the zone regions 1 and 2, wherein the barrier device (5) immediately stops and wherein furthermore the barrier device (5) can be moved with a low force in the desired direction.

## Revendications

1. Ensemble (1, 1", 1‴) destiné à une installation de passage, ledit ensemble comprenant au moins un montant de porte (10, 11) et un dispositif de blocage (5), au moins un montant (3, 4) et des barres horizontales (18, 19, 20),
l'ensemble comportant une barrière lumineuse (2),
un grand nombre d'unités d'émission et de réception (6) de la barrière lumineuse (2) étant prévues sur une première barre (18) et
un grand nombre de bandes réfléchissantes (7, 7') de la barrière lumineuse (2) étant en outre disposées sur une deuxième barre opposée (19) et réfléchissant la lumière (58) émise par les unités d'émission et de réception (6),
**caractérisé en ce que**
une autre deuxième barre opposée (20) est prévue qui est disposée au-dessous de la deuxième barre opposée (19),
les deux deuxièmes barres (19, 20) étant prévues pour recevoir le grand nombre de bandes réfléchissantes (7).

2. Ensemble selon la revendication 1, le dispositif de blocage (5) étant conçu sous la forme d'une porte pivotante.

3. Ensemble selon la revendication 1, le nombre d'unités d'émission et de réception (6) et de bandes réfléchissantes (7, 7') dépendant de la conception du dispositif de blocage (5).

4. Ensemble selon la revendication 1, une distance étant prévue entre deux du grand nombre de bandes réfléchissantes (7, 7').

5. Ensemble selon la revendication 4, la distance étant comprise entre 50 et 100 mm, de préférence 80 mm.

6. Ensemble selon la revendication 1, la largeur d'une bande réfléchissante (7, 7') étant dans une plage allant de 10 à 70 mm, de préférence étant de 40 mm.

7. Ensemble selon la revendication 1, la hauteur d'une bande réfléchissante (7, 7') étant dans une plage allant de 180 à 320 mm, de préférence étant de 260 mm.

8. Ensemble selon la revendication 1, la hauteur d'une bande réfléchissante (7') étant telle que les bandes réfléchissantes (7') touchent le sol.

9. Ensemble selon la revendication 1, les bandes réfléchissantes (7, 7') étant formées à partir d'un film réfléchissant.

10. Ensemble selon la revendication 1, les bandes réfléchissantes (7, 7') étant collées sur un mur.

11. Ensemble selon la revendication 1, un certain nombre de bandes réfléchissantes (7, 7'), allant de un à dix, étant utilisé par unité d'émission et de réception (6).

12. Ensemble selon la revendication 1, une distance de 100 à 150 mm étant prévue entre les unités d'émission et de réception (6) individuelles.

13. Ensemble selon la revendication 1, une distance de 0,5 et 2,5 m, de préférence de 1 et 2 m, étant prévue entre les unités d'émission et de réception (6) et les bandes réfléchissantes (7, 7').

14. Procédé de fonctionnement d'un ensemble selon l'une des revendications précédentes,
si une détection d'obstacle étendue (AOD) est prévue, une division étant alors effectuée en une zone 1 et une zone 2, un mouvement d'une personne ou d'un objet pouvant également être détecté à faible vitesse dans les zones 1 et 2, le dispositif de blocage (5) bloquant immédiatement et le dispositif de blocage (5) pouvant être déplacé dans la direction souhaitée avec une force faible.
